# EUROPEAN PATENT SPECIFICATION

(11) **EP 2 091 191 B1**
(45) Date of publication and mention of the grant of the patent: **21.11.2012**
(21) Application number: 08783966.8
(22) Date of filing: 13.08.2008
(51) Int. Cl.: H04L 29/06, H04L 29/08

(54) **METHOD, SYSTEM, SERVER AND TERMINAL FOR CALL REDIRECTION**
VERFAHREN, SYSTEM, SERVER UND ENDGERÄT ZUR RUFUMLEITUNG
PROCÉDÉ, SYSTÈME, SERVEUR ET TERMINAL DE REDIRECTION D'APPEL

(30) Priority: 14.08.2007 CN 200710076510
(43) Date of publication of application: 19.08.2009
(73) Proprietor: Huawei Technologies Co., Ltd., Longgang District, Shenzhen Guangdong 518129 (CN)
(72) Inventor: YANG, Jian, Longgang District 518129 Shenzhen (CN); CHEN, Guoqiao, Longgang District 518129 Shenzhen (CN); WANG, Lei, Longgang District 518129 Shenzhen (CN); DONG, Ting, Longgang District 518129 Shenzhen (CN); ZHANG, Huiping, Longgang District 518129 Shenzhen (CN); FAN, Shunan, Longgang District 518129 Shenzhen (CN); WANG, Zheng, Longgang District 518129 Shenzhen (CN)
(74) Representative: Kreuz, Georg Maria
(86) International application number: PCT/CN2008/071973
(87) International publication number: WO 2009/021459

(56) References cited:
- CN-A- 1 767 666
- CN-A- 101 015 186
- US-A1- 2005 055 414
- US-A1- 2005 141 528
- US-A1- 2006 126 806
- ACHARYA A ET AL: "Unleashing the Power of Wearable Devices in a SIP Infrastructure" PERVASIVE COMPUTING AND COMMUNICATIONS, 2005. PERCOM 2005. THIRD IEEE INTERNATIONAL CONFERENCE ON KAUAI ISLAND, HI, USA 08-12 MARCH 2005, PISCATAWAY, NJ, USA,IEEE, 8 March 2005 (2005-03-08), pages 159-168, XP010779650 ISBN: 978-0-7695-2299-9

## Description

### FIELD OF THE INVENTION

The present invention relates to the field of a wireless communication system, and more particularly to a method, a server, and a terminal for implementing call direction.

### BACKGROUND

A session initiation protocol (SIP) is a control (signaling) protocol of an application layer, and is used to establish, modify, and terminate calls between Internet protocol (IP) (an interconnection protocol between networks) based subscribers. The SIP protocol is a part of an Internet multimedia frame structure, which may be used together with mature Internet protocols in the prior art. The SIP protocol is used to position a terminal, contact with one terminal to determine the feasibility of establishing a session with the terminal, establish a session between the terminals to exchange media information, and modify/terminate existing media sessions, etc.

As a content distribution mechanism, PUSH adopts a working manner in a client/server mode, and requires the server to distribute the required content without a detailed request from the client. PUSH is initiated by the server, and allows a PUSH initiator (PI) (PUSH message generator) to push information and transmit instructions to a PUSH proxy gateway (PPG), and further transmit the PUSH content to the subscribers.

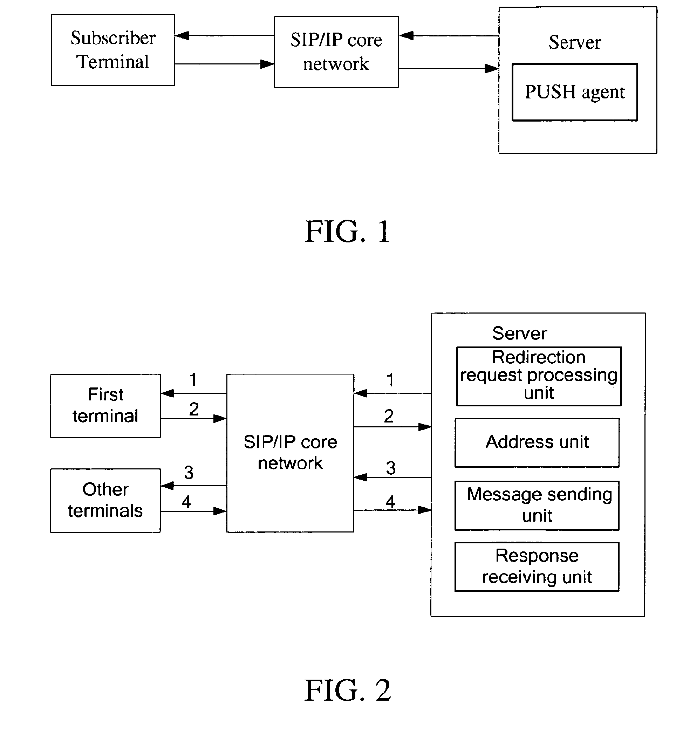

For a SIP PUSH service, the PUSH content, for example, PUSH over the air (OTA) content, is encapsulated in a SIP message and transported via an existing SIP/IP core network. Referring to FIG. 1, it is a schematic structural view of a system, in which network entities of a register server, a PUSH agent, a SIP/IP core network, and a client are included.

The register server is a server adapted to accept a register request in a SIP network and provide a terminal positioning service.

The PUSH agent is one network unit, capable of transporting service information based on the SIP, which is adapted to receive service information from an IP network or other networks, and transmit the service information based on the SIP after carrying the service information in the SIP message.

The SIP/IP core network represents the SIP network and all the network units on the SIP network.

The client represents terminal equipment, which may be a terminal on a fixed communication network or a terminal on a mobile communication network.

A critical flow of the solution includes the steps as follows.

1. The PUSH agent sends PUSH information to the client through a SIP Message.

2. The client returns a response message of receiving the PUSH information.

During the process of realizing the present invention, the inventors find that at least the following problems exist in the prior art. In the prior art, no call transfer method is provided. For example, one subscriber owns a plurality of terminals, and address information of each terminal is saved on the server. When the server sends a multimedia message to one of the subscriber's terminals through the SIP/IP core network, since the terminal of the subscriber may not support such a service and fails to show the service that reaches the terminal, the subscriber cannot figure out the received information content, thereby effecting subscriber's experience. What is worse, if the server is set to send the multimedia message to each terminal of the subscriber, a network transmission load is increased, thereby wasting the resources.
ACHARYA A ET AL: "Unleashing the Power of Wearable Devices I a SIP Infrastructure" (PERVASIVE COMPUTING AND COMMUNICATIONS, 2005. THIRD IEEE INTERNATIONAL CONFERENCE ON KAUAI ISLAND, HI, USA 08-12 MARCH 2005, PISCATAWAY, NJ, USA, IEEE, 8 March 2005, pages 159-168) discloses a method for call redirection, in this method, a caller sends an invite message to a server, and the server transfers this invite message to a callee's wearable according to the address of the callee's wearable, then the callee's wearable returns a "Moved Temporarily" SIP response which specifies a second SIP URI (phone number) that the caller can use to retry the call setup, and the caller sends, through the server, an invite message to the second SIP URI.
US 2006/126806 A1 discloses a call processing. In the processing, a first call from a calling party intended for a called party is received at a call processing system. The call processing system places a second call to a telephonic device associated with the called party. The calling party and called party communicate via the first and second calls. A determination is made that the first call has been terminated. A call-back instruction is received from the called party while the second call is still in place. At least partly in response to receiving the call-back instruction, a third call is placed to a terminal associated with the calling party. The calling party and the called party can communicate via the second call and the third call.
US 2005/141528 A1 discloses a media gateway built in an exchange. The media gateway includes a media gateway control unit, a first protocol processing unit, and a second protocol processing unit. The media gateway control unit instructs the first protocol processing unit to start call connection processing in response to a call connection command from a PSTN telephone, aborts the call connection processing of the first protocol processing unit when receiving a connection protocol change command from the IP call connection controller before completing the call connection according to the first protocol, and instructs the second protocol processing unit to execute call connection processing.

### SUMMARY

Various embodiments of the present invention provide a method, a server, and a terminal for implementing call direction, so as to solve a redirection problem of a SIP PUSH service in the prior art, that is, when one of the terminals of a subscriber receives a service not supported by the terminal or through configuration of the subscriber, messages sent from a server are permanently or temporally transferred to other terminals.

According to a first aspect of the present invention a method for implementing call direction is provided, which includes the steps as follows. A server sends a PUSH message to a terminal, the server receives a redirection request from the terminal, and the server sends the PUSH message is sent according to the redirection request; where the push message is a SIP message encapsulated by adopting a SIP protocol.

According to a fourth aspect of the present invention a server for implementing call direction is provided, which includes a message sending unit, a redirection request processing unit, and an address unit. The message sending unit is adapted to send, though a SIP/Internet protocol (IP) core network, a PUSH message to a terminal. The redirection request processing unit is adapted to receive and parse a redirection request from the terminal, and determine whether the redirection request carries address information of other terminals or not. The address unit is adapted to obtain the address information of the corresponding redirection terminal according to a parsing result. The message sending unit sends the PUSH message according to the address information of the redirection terminal, where the PUSH message is a session initiation protocol (SIP) message encapsulated by adopting a SIP protocol.

As compared with the prior art, the present invention has the advantages as follows.

According to the aforementioned scenarios, a subscriber has a plurality of terminals. When one of the terminals receives a service not supported by the terminal or through the configuration of the subscriber, the service can be permanently or temporally transferred to other terminals of the subscriber. In the embodiments of the present invention, the subscriber is enabled to select the terminal for receiving the service, thereby enhancing the subscriber's experience, and avoiding the wastes of network resources.

### BRIEF DESCRIPTION OF THE DRAWINGS

FIG. 1 a schematic structural view of a SIP-based PUSH information system in the prior art;

FIG. 2 is a schematic structural view of a system for implementing call direction according to a first embodiment of the present invention;

FIG. 3 is a schematic structural view of a terminal for implementing call direction according to the first embodiment of the present invention;

FIG. 4 is a signaling flow chart of a method for implementing call direction according to the first embodiment of the present invention;

FIG. 8 is a first signaling flow chart of a method for implementing call direction according to a third embodiment of the present invention;

FIG. 9 is a second signaling flow chart of the method for implementing call direction according to the third embodiment of the present invention; and

FIG. 10 is a signaling flow chart of a method for implementing call direction according to a fourth embodiment of the present invention.

### DETAILED DESCRIPTION OF THE EMBODIMENTS

Embodiments of the present invention provide a method, a system, a server, and a terminal for implementing call direction. The precondition of the call direction is that, a subscriber has more than one terminal, and address information of all the terminals is registered in a core network and is delivered to a server.

FIG. 2 is a schematic structural view of a system for implementing call direction according to a first embodiment of the present invention. Referring to FIG. 2, the system for implementing call direction includes a SIP/IP core network and a server. The SIP/IP core network is used for the transport of a SIP message, and the SIP message may include PUSH content, for example, PUSH OTA content. The server is adapted to transmit/receive messages through the SIP/IP core network, so as to communicate with a first terminal and other terminals.

The server is further adapted to receive a redirection request from a terminal, and send the message to a corresponding terminal according to the redirection request.

In the embodiment of the system of the present invention, the server and the terminal may realize call redirection in the following manner.

1. The server sends a PUSH message, for example, Message/Notify message, to the first terminal through the SIP/IP core network.

2. If the subscriber of the first terminal expects other terminals to receive the message, the first terminal may return a redirection request. The redirection request carries a redirection address, and may further carry a redirection state code for determining a redirection time limit. For example, the redirection state code represents a permanent redirection or a temporal redirection to other terminals, for instance, a redirection state code 301 represents a permanent redirection to other terminals, and a redirection state code 302 represents a temporal redirection to other terminals. Furthermore, the address of other terminals may be carried in a Contact Header field, so as to notify the server that the expected redirection address is u2@example.com.

3. After receiving the redirection request, the server sends the Message/Notify message again through the SIP/IP core network, and the address is changed to the address of other terminals.

4. After receiving the PUSH message, other terminals return 200 OK messages, and perform a normal process.

Referring to FIG. 2, in an embodiment of a server for implementing call direction of the present invention, the server includes a redirection request processing unit, and a message sending unit. The redirection request processing unit is adapted to receive and parse the redirection request, and determine whether the redirection request carries the address information of other terminals or not. The message sending unit is adapted to send a message through the SIP/IP core network. The server may further include an address information extracting unit and a response receiving unit. The address information extracting unit is adapted to extract the address information from the redirection request. The response receiving unit is adapted to receive and send a response through the SIP/IP core network.

The message sending unit of the server sends a message to a first terminal through the SIP/IP core network, and if the first terminal does not support the service, the first terminal sends a redirection request to the server when receiving the message. The redirection request processing unit of the server receives the redirection request returned by the first terminal through the SIP/IP core network, and then parses the redirection request, and determines whether the redirection request carries address information of other terminals or not. An address unit is adapted to obtain the address information according to a parsing result of the redirection request.

The address unit may further include an address information extracting unit and an address storage unit. If the redirection request carries the address information of other terminals, the address information extracting unit is triggered to extract the address information from the redirection request, and then the message sending unit of the server sends the message according to the address information. If the redirection request does not carry the address information, pre-stored address information is obtained from the address storage unit, and then the message sending unit of the server sends the message according to the address information.

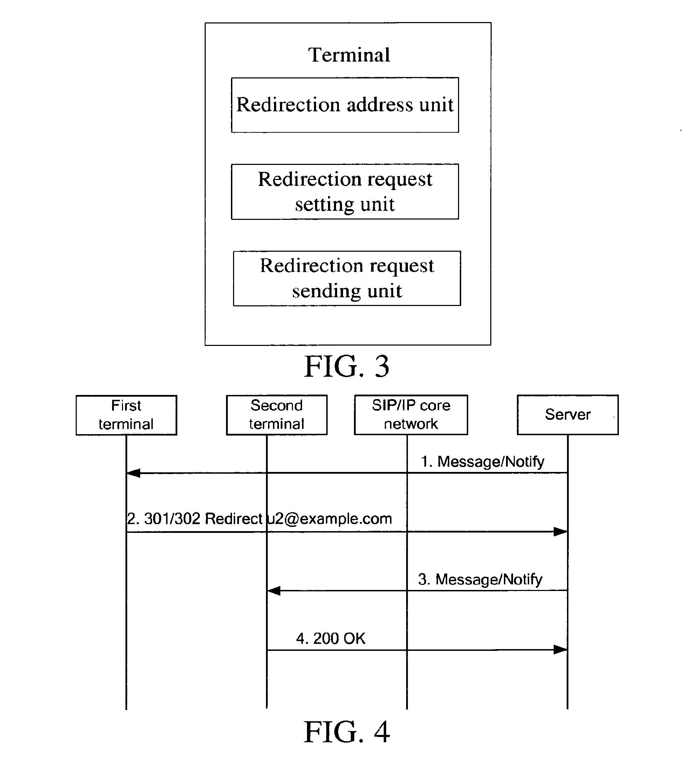

FIG. 3 is a schematic structural view of a terminal for implementing call direction according to the first embodiment of the present invention. Referring to FIG. 3, the terminal includes a redirection address unit, a redirection request setting unit, and a redirection request sending unit. The redirection address unit is adapted to store a redirection address. The redirection request setting unit is adapted to set a redirection request. The redirection request sending unit is adapted to send the redirection request through the SIP/IP core network.

When the terminal receives a PUSH message sent from the server through the SIP/IP core network, the redirection request sending unit sends a redirection request determined by the redirection request setting unit through the SIP/IP core network.

FIG. 4 is a signaling flow chart of a method for implementing call direction according to the first embodiment of the present invention. Referring to FIG. 4, when the server expects to send a message to a first terminal of the subscriber, the request reaches the first terminal through the SIP/IP core network. Unfortunately, the first terminal does not support the service, or the subscriber intends to receive the message by a second terminal, the first terminal returns 3xx redirection information to the server through the SIP/IP core network. The server sends the PUSH message to the address of the second terminal reported by the first terminal according to the redirection information reported by the first terminal. If the second terminal can receive the message, the second terminal returns a receive response to the server.

The detailed steps of the method for implementing call direction are given as follows.

1. The server sends a PUSH message, for example, Message/Notify message, to a first terminal through the SIP/IP core network.

2. If the subscriber of the first terminal expects the second terminal to receive the message, the first terminal sends the redirection request to the server. The redirection request carries a redirection address, and may further carry a redirection state code for determining a redirection time limit, for example, the redirection state code 301 or 302 represents a permanent redirection or a temporal redirection to the second terminal respectively. Furthermore, the address of the second terminal may be carried in a Contact Header field, so as notify the server that the expected redirection address is u2@example.com.

3. After receiving the redirection request, the server sends the Message/Notify message again through the SIP/IP core network, and the address is changed to the address of the second terminal.

4. After receiving the PUSH message, the second terminal returns a 200 OK message, and performs a normal process.

The Message/Notify message is an example of a SIP PUSH message, and the solution of the embodiment of the present invention is applicable to various SIP PUSH services with different realizing manners.

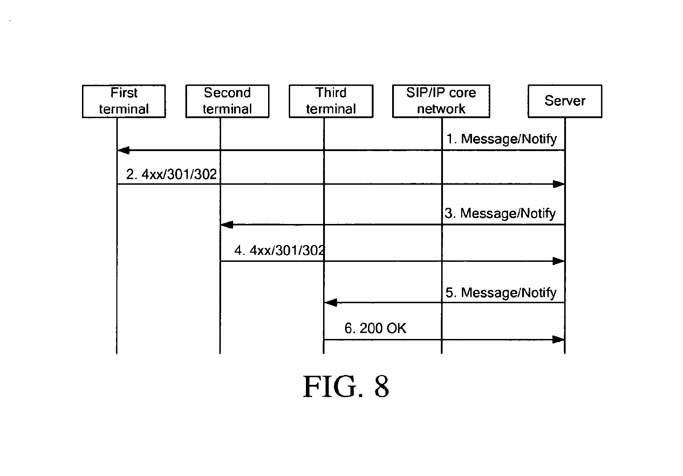

FIG. 8 is a flow chart of a first signaling of a method for implementing call direction according to a third embodiment of the present invention. Referring to FIG. 8, when a server sends a message to a first terminal, the first terminal rejects receiving the message or fails to receive the message due to the reason of timeout, a state indication is returned to the server to notify the server that the message sending operation fails, and the returned message does not carry address information. The server further attempts to send the message to a second terminal of the subscriber, and if the second terminal can receive the service, the second terminal returns a response to notify the server that the message is successfully received. If the second terminal does not support the service message, or is not expected to receive the service message, or fails to receive the message due to the reason of timeout, the second terminal returns a response to notify the server that the message sending operation fails. The server sends the message to a third terminal as a third attempt. If the third terminal can receive the message, the third terminal returns a response to notify the server that the message is successfully received.

The detailed steps of the method for implementing call direction are given as follows.

1. The server sends a PUSH message, for example, a Message/Notify message, to the first terminal through the SIP/IP core network.

2. The first terminal receives the message, prompts the server to redirect the message to other terminals, and sends a redirection request to the server. The redirection request carries a redirection message state code 301/302, but does not provide address information of a designated terminal. Alternatively, the first terminal is not expected to receive or cannot receive the message, and returns a 4xx state code to indicate to the server that the message sending operation fails.

3. The server attempts to send the Message/Notify request to the second terminal according to address information registered by the terminal.

4. The second terminal returns a message the same as that of the first terminal.

5. The server attempts to send the Message/Notify request to the third terminal according to the address information registered by the terminal.

6. The third terminal can receive the message, and returns a 200 OK state code.

Similarly, the above process is applicable to the situation that the server attempts to send the message to the second terminal and the third terminal at the same time when the server fails to send the message to the first terminal.

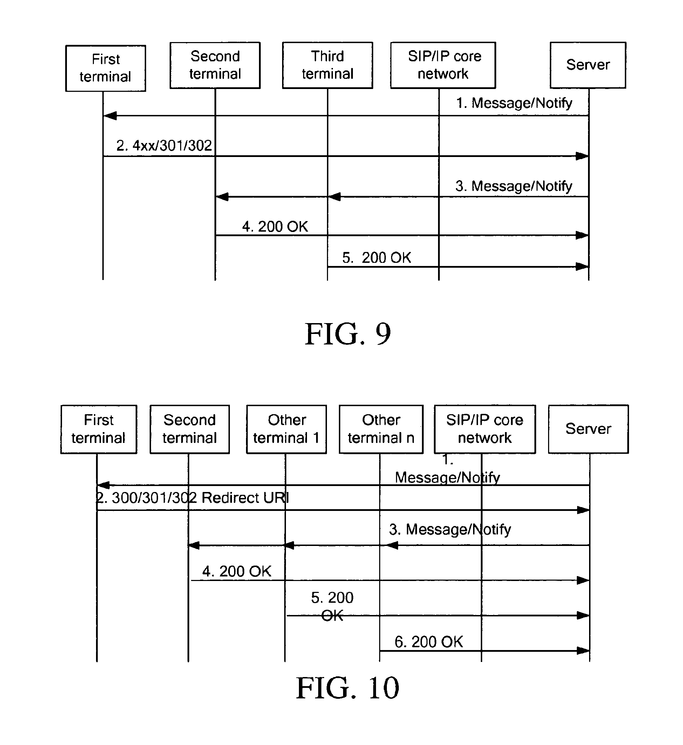

FIG. 9 is a second signaling flow chart of the method for implementing call direction according to the third embodiment of the present invention.

The detailed steps of the method for implementing call direction are given as follows.

1. The server sends the Message/Notify message to the first terminal through the SIP/IP core network.

2. The first terminal receives the message, prompts the server to redirect the message to other terminals, and returns a state code 301/302, but does not provide address information of a designated terminal. Alternatively, the first terminal is not expected to receive the message or cannot receive the message, and returns a 4xx state code to indicate to the server that the message sending operation fails.

3. The server sends the Message/Notify request to an address registered by the terminal.

4. If the second terminal can receive the message, the second terminal returns a 200 OK.

5. If the third terminal can receive the message, the third terminal returns a 200 OK.

The Message/Notify message is an example of a SIP PUSH message, and the solution of the embodiment of the present invention is applicable to various SIP PUSH services with different realizing manners.

FIG. 10 is a signaling flow chart of a method for implementing call direction according to a fourth embodiment of the present invention. Referring to FIG. 10, when a server sends a message to a first terminal, if the subscriber of the first terminal expects that the message is redirected to other terminals, the first terminal carries a plurality of URI domain names in a state code 301/302 according to the URIs in a local storage list, and sends the URIs to the server. The server sends the message to each terminal according to the addresses, and each terminal returns receiving state information.

The detailed steps of the method for implementing call direction are given as follows.

1. The server sends the Message/Notify request to the first terminal through the SIP/IP core network.

2. If the subscriber of the first terminal expects the message to be sent to other terminals, the first terminal returns a redirection state code 300, 301, or 302, carries addresses of redirection terminals in a Contact Header field, and notifies the server that the address of each redirection terminal is one URI.

3. The server sends the Message/Notify message to the address of each terminal in the list.

4. The second terminal returns a receive response.

5. Other terminal 1 returns a response.

6. Other terminal n returns a response.

The Message/Notify message is an example of a SIP PUSH message, and the solution of the embodiment of the present invention is applicable to various SIP PUSH services with different realizing manners.

The core network according to the present invention is not limited to the SIP/IP core network, and may be a public land mobile-communication network (PLMN) core network, for example, a GSM core network, an IP multimedia subsystem (IMS), an IP network, and a SIP Push core network.

The state code of the redirection message in the embodiments of the present invention is an example for realizing the redirection message, and the solution of the embodiments of the present invention is applicable to various redirection services with different realizing manners.

In the call direction realized according to one or more embodiments of the present invention, if a subscriber has a plurality of terminals, when one of the terminals receives a service not supported by the terminal or through the configuration of the subscriber, the service can be permanently or temporally transferred to other terminals of the subscriber. In the embodiments of the present invention, the subscriber is enabled to select the terminal for receiving the service, thereby enhancing the subscriber's experience, and avoiding the wastes of network resources.

Through the descriptions of the above embodiments, those skilled in the art may clearly appreciate that the present invention may be realized through hardware or through combining software with a necessary universal hardware platform. Based on such understanding, the technical solution of the present invention may be realized in a form of a software product. The software product may be stored in a non-volatile storage medium, for example, a CD-ROM, a USB disk, or a mobile hard disk, which includes several instructions for enabling one computer device, for example, a personal computer, a server, or network equipment, to execute the method according to each embodiment of the present invention.

## Claims

1. A method for implementing call direction, comprising:
sending, by a server, a PUSH message to a terminal through a SIP/IP core network;
**characterized by** further comprising:
receiving, by the server, a redirection request from the terminal; and
sending, by the server, the PUSH message according to the redirection request; wherein the PUSH message is a session initiation protocol, SIP, message encapsulated by adopting a SIP protocol.

2. The method according to claim 1, wherein
the redirection request carries redirection address information; and
the process of sending the PUSH message according to the redirection request further comprises: sending the PUSH message according to the redirection address information carried in the redirection request.

3. The method according to claim 1, wherein the process of sending the PUSH message according to the redirection request further comprises: obtaining preset address information according to the redirection request, and sending the PUSH message according to the address information.

4. The method according to claim 2 or 3, wherein: the redirection address information carries the addresses of one or more terminals, if the redirection address information carries the addresses of a plurality of terminals, the PUSH message is sent to the plurality of terminals at the same time or one by one according to a designated sequence.

5. The method according to claim 1, further comprising: determining a redirection time limit according to a redirection code carried in the redirection request.

6. The method according to claim 5, wherein the preset address information is of another terminal, the another terminal and the first terminal are of one subscriber, and the address information of the first terminal and the another terminal is registered in a core network and is delivered to a server and the process of obtaining preset address information according to the redirection request, and sending the PUSH message according to the address information is:
obtaining preset address information according to the redirection request, and sending the PUSH message according to the address information when the redirection request does not carry address information.

7. A server for implementing call direction, comprising:
a message sending unit, adapted to send, though a SIP/Internet protocol (IP) core network, a PUSH message to a terminal; **characterized by** further comprising:
a redirection request processing unit, adapted to receive a redirection request from the terminal, parse the redirection request, and determine whether the redirection request carries address information of other terminals or not; and
an address unit, adapted to obtain the address information of a corresponding redirection terminal according to a parsing result;
wherein the message sending unit is further adapted to send the PUSH message according to the address information of the redirection terminal and the PUSH message is a session initiation protocol, SIP, message encapsulated by adopting a SIP protocol.

8. The server according to claim 7, wherein the address unit further comprises:
an address information extracting unit, adapted to extract the address information from the parsing result; and
an address storage unit, adapted to save the address information of the redirection terminal,
wherein when the redirection request does not carry the address information, the address storage unit provides corresponding address information.

## Patentansprüche

1. Verfahren zum Implementieren von Anruflenkung, umfassend:
Senden einer PUSH-Nachricht durch einen Server zu einem Endgerät durch ein SIP/IP-Kernnetz; **dadurch gekennzeichnet, dass** es ferner Folgendes umfasst:
Empfangen einer Umlenkungsanforderung durch den Server von dem Endgerät; und Senden der PUSH-Nachricht durch den Server gemäß der Umlenkungsanforderung; wobei die PUSH-Nachricht eine Nachricht des Session Initiation Protocol SIP ist, die durch Verwendung eines SIP-Protokolls eingekapselt wird.

2. Verfahren nach Anspruch 1, wobei
die Umlenkungsanforderung Umlenkungsadresseninformationen führt; und
der Prozess des Sendens der PUSH-Nachricht gemäß der Umlenkungsanforderung ferner Folgendes umfasst: Senden der PUSH-Nachricht gemäß den in der Umlenkungsanforderung geführten Umlenkungsadresseninformationen.

3. Verfahren nach Anspruch 1, wobei der Prozess des Sendens der PUSH-Nachricht gemäß der Umlenkungsanforderung ferner Folgendes umfasst: Erhalten von voreingestellten Adresseninformationen gemäß der Umlenkungsanforderung und Senden der PUSH-Nachricht gemäß den Adresseninformationen.

4. Verfahren nach Anspruch 2 oder 3, wobei die Umlenkungsadresseninformationen die Adressen von einem oder mehreren Endgeräten führen und wenn die Umlenkungsadresseninformationen die Adressen von mehreren Endgeräten führen, die PUSH-Nachricht gleichzeitig oder gemäß einer designierten Sequenz einzeln zu den mehreren Endgeräten gesendet wird.

5. Verfahren nach Anspruch 1, ferner umfassend Bestimmen einer Umlenkungszeitgrenze gemäß einem in der Umlenkungsanforderung geführten Umlenkungscode.

6. Verfahren nach Anspruch 5, wobei die voreingestellten Adresseninformationen von einem anderen Endgerät sind, das andere Endgerät und das erste Endgerät von einem Teilnehmer sind und die Adresseninformationen des ersten Endgeräts und des anderen Endgeräts in einem Kernnetz registriert sind und an einen Server abgeliefert werden und der Prozess des Erhaltens von voreingestellten Adresseninformationen gemäß der Umlenkungsanforderung und des Sendens der PUSH-Nachricht gemäß den Adresseninformationen folgendermaßen lautet:
Erhalten von voreingestellten Adresseninformationen gemäß der Umlenkungsanforderung und Senden der PUSH-Nachricht gemäß den Adresseninformationen, wenn die Umlenkungsanforderung keine Adresseninformationen führt.

7. Server zum Implementieren von Anruflenkung, umfassend:
eine Nachrichtensendeeinheit, die dafür ausgelegt ist, durch ein Kernnetz des SIP/Internet-Protokolls (IP) eine PUSH-Nachricht zu einem Endgerät zu senden;
**dadurch gekennzeichnet, dass** er ferner Folgendes umfasst:
eine Umlenkungsanforderungsverarbeitungseinheit, die dafür ausgelegt ist, eine Umlenkungsanforderung von dem Endgerät zu empfangen, die Umlenkungsanforderung zu analysieren und zu bestimmen, ob die Umlenkungsanforderung Adresseninformationen anderer Endgeräte führt oder nicht; und
eine Adresseneinheit, die dafür ausgelegt ist, die Adresseninformationen eines entsprechenden Umlenkungsendgeräts gemäß einem Analyseergebnis zu erhalten;
wobei die Nachrichtensendeeinheit ferner dafür ausgelegt ist, die PUSH-Nachricht gemäß den Adresseninformationen des Umlenkungsendgeräts zu senden, und die PUSH-Nachricht eine Nachricht des Session Initiation Protocol SIP ist, die durch Verwendung eines SIP-Protokolls eingekapselt wird.

8. Server nach Anspruch 7, wobei die Adresseneinheit ferner Folgendes umfasst:
eine Adresseninformations-Extraktionseinheit, die dafür ausgelegt ist, die Adresseninformationen aus dem Analyseergebnis zu extrahieren; und
eine Adressenspeichereinheit, die dafür ausgelegt ist, die Adresseninformationen des Umlenkungsendgeräts abzuspeichern,
wobei, wenn die Umlenkungsanforderung die Adresseninformationen nicht führt, die Adressenspeichereinheit entsprechende Adresseninformationen bereitstellt.

## Revendications

1. Procédé de mise en oeuvre d'une orientation d'appel, comprenant :
l'envoi, par un serveur, d'un message PUSH à un terminal par un réseau coeur SIP/IP ;
**caractérisé en ce qu'**il comprend en outre :
la réception, par le serveur, d'une requête de redirection depuis le terminal ; et
l'envoi, par le serveur, du message PUSH en fonction de la requête de redirection ;
dans lequel le message PUSH est un message de protocole de lancement de session, SIP, encapsulé par l'adoption d'un protocole SIP.

2. Procédé selon la revendication 1, dans lequel
la requête de redirection inclut des informations d'adresse de redirection ; et
le processus d'envoi du message PUSH en fonction de la requête de redirection comprend en outre : l'envoi du message PUSH en fonction des informations d'adresse de redirection incluses dans la requête de redirection.

3. Procédé selon la revendication 1, dans lequel le processus d'envoi du message PUSH en fonction de la requête de redirection comprend en outre : l'obtention d'informations d'adresse préétablies en fonction de la requête de redirection, et l'envoi du message PUSH en fonction des informations d'adresse.

4. Procédé selon la revendication 2 ou 3, dans lequel : les informations d'adresse de redirection incluent les adresses d'un ou de plusieurs terminaux, si les informations d'adresse de redirection incluent les adresses d'une pluralité de terminaux, le message PUSH est envoyé à la pluralité de terminaux simultanément ou un à la fois en fonction d'une séquence désignée.

5. Procédé selon la revendication 1, comprenant en outre : la détermination d'une limite de temps de redirection en fonction d'un code de redirection inclus dans la requête de redirection.

6. Procédé selon la revendication 5, dans lequel les informations d'adresse préétablies sont d'un autre terminal, l'autre terminal et le premier terminal sont ceux d'un même abonné, et les informations d'adresse du premier terminal et de l'autre terminal sont enregistrées dans un réseau coeur et sont délivrées à un serveur et le processus d'obtention d'informations d'adresse préétablies en fonction de la requête de redirection, et d'envoi du message PUSH en fonction des informations d'adresse consiste à :
obtenir des informations d'adresse préétablies en fonction de la requête de redirection, et envoyer le message PUSH en fonction des informations d'adresse quand la requête de redirection n'inclut pas d'informations d'adresse.

7. Serveur de mise en oeuvre d'une orientation d'appel, comprenant :
une unité d'envoi de message, adaptée pour envoyer à un terminal, par le biais d'un réseau coeur SIP/à protocole Internet (IP) un message PUSH ; **caractérisé en ce qu'**il comprend en outre :
une unité de traitement de requête de redirection, adaptée pour recevoir une requête de redirection depuis le terminal, analyser syntaxiquement la requête de redirection, et déterminer que la requête de redirection inclut ou non des informations d'adresse d'autres terminaux ; et
une unité d'adresse, adaptée pour obtenir les informations d'adresse d'un terminal de redirection correspondant en fonction d'un résultat d'analyse syntaxique ;
dans lequel l'unité d'envoi de message est adaptée en outre pour envoyer le message PUSH en fonction des informations d'adresse du terminal de redirection et le message PUSH est un message de protocole de lancement de session, SIP, encapsulé par l'adoption d'un protocole SIP.

8. Serveur selon la revendication 7, dans lequel l'unité d'adresse comprend en outre :
une unité d'extraction d'informations d'adresse, adaptée pour extraire les informations d'adresse du résultat d'analyse syntaxique ; et
une unité de mémorisation d'adresse, adaptée pour sauvegarder les informations d'adresse du terminal de redirection,
dans lequel quand la requête de redirection n'inclut pas les informations d'adresse, l'unité de mémorisation d'adresse fournit les informations d'adresse correspondantes.
